# EUROPÄISCHE PATENTSCHRIFT

(11) **EP 3 450 807 B1**
(45) Veröffentlichungstag und Bekanntmachung des Hinweises auf die Patenterteilung: **18.05.2022**
(21) Anmeldenummer: 18164401.4
(22) Anmeldetag: 27.03.2018
(51) Int. Cl.: F16K 1/44

(54) **KONDENSATABLEITER UND ASEPTISCHES DOPPELSITZVENTIL**
STEAM TRAP AND ASEPTIC DOUBLE-SEAT VALVE
PURGEUR D'EAU DE CONDENSATION ET SOUPAPE À DOUBLE SIÈGE ASEPTIQUE

(30) Priorität: 30.08.2017 DE 102017215102
(43) Veröffentlichungstag der Anmeldung: 06.03.2019
(73) Patentinhaber: Evoguard GmbH, 93149 Nittenau (DE)
(72) Erfinder: Sauer, Martin, 93149 Nittenau (DE)
(74) Vertreter: Grünecker Patent- und Rechtsanwälte PartG mbB

(56) Entgegenhaltungen:
- EP-A1- 0 545 846
- EP-A1- 3 255 324
- DE-A1-102011 050 955
- US-A1- 2007 151 611
- US-A1- 2015 211 642

## Beschreibung

Die Erfindung betrifft einen Kondensatableiter gemäß Oberbegriff des Patentanspruchs 1, ein aseptisches Doppelsitzventil gemäß Oberbegriff des Patentanspruchs 13 sowie eine Getränke-Abfüllanlage gemäß Patentanspruch 14.

In dem Kondensatableiter gemäß DE 10 2011 050 955 A1 eines aseptischen Doppelsitzventils einer Abfüllanlage für Lebensmittel oder Getränke weist der Ventilkegel am kleindurchmessrigen Ende einen zylindrischen Fortsatz auf, der sowohl in der Schließstellung als auch in der Offenstellung in den als zylindrischen Kanal ausgebildeten Auslass ragt und darin einen kreisringförmigen Durchströmraum begrenzt, der nach Art einer Kapillardrossel selbst in der Offenstellung noch eine mit der Ventilkegelbewegung variierende Längserstreckung hat. Der Sitz und der Ventilkegel sind so verbaut, dass die Strömungsrichtung vom großquerschnittigen Ende des Sitzes über das kleinquerschnittige Ende des Sitzes in den Auslass verläuft. Der Ventilkegel und der Sitz haben gleiche Kegelwinkel, so dass in der Schließstellung der Sitz dicht verschlossen ist. Der Querschnitt des in den Auslass ragenden Fortsatzes des Ventilkegels ist nur geringfügig kleiner als der Querschnitt des Auslasses, so dass der Dampf- Druckabfall beim Ablassen von Kondensat über den Auslass begrenzt wird. Mit Kondensat wird der Leckageraum des Doppelsitzventils gespült, um enthaltene Verunreinigungen und Partikel über den Kondensatableiter auszutragen, und wird nachfolgend mit Dampf sterilisiert, um einen aseptischen Zustand zumindest im Leckageraum herzustellen. Der Antrieb zum Schalten ist pneumatisch.

Aus US 4,234,008 A ist ein nicht schaltbarer Kondensatableiter mit einer Drosselanordnung bekannt, in der eine Vielzahl radialer Kanäle einen zentralen Axialkanal schneiden, wobei die Kanal-Querschnitte groß genug sind, um das Austragen von Partikeln und Fremdmaterial zu gewährleisten.

Aus GB 25 12 210 A ist ein nicht schaltbarer Kondensatableiter für eine Rohrleitung bekannt, der eine Festdrossel enthält, welcher stromauf ein zur Reinigung ausbaubarer mechanischer Filter zum Zurückhalten von Partikeln und Verunreinigungen vorgeschaltet ist. In EP 3 255 324 A1 mit älterem Zeitrang wird ein Kondensatableiter eines aseptischen Doppelsitzventils vorgeschlagen, in welchem z.B. der Ventilkegel wenigstens eine Steuerkerbe aufweist, die selbst in der Schließstellung beim Zusammenspiel zwischen dem Sitz und dem Ventilkegel im Sitz eine zweiteilige Düse definiert. Der Ventilkegel wird durch einen Kegelstumpf definiert, dessen kleindurchmessriges Ende in der Schließstellung in etwa in den zylindrischen Einlass eintaucht.

Weiterer Stand der Technik ist enthalten in: US 2007/0151611 A1; EP 0 545 846 A1; US 2015/0211642 A1.

Der Erfindung liegt die Aufgabe zugrunde, einen Kondensatableiter, ein aseptisches Doppelsitzventil und einer Getränke-Abfüllanlage anzugeben, die sich durch ein verbessertes Betriebsverhalten und verringerte Wartungs- und Reinigungsfrequenzen auszeichnen. Insbesondere soll der Kondensatableiter im Betrieb weitgehend unempfindlich gegen mit dem Kondensat/Dampf transportierte Partikel sein.

Die gestellte Aufgabe wird mit den Merkmalen der unabhängigen Patentansprüche gelöst. Durch den stromauf des Sitzes im Einlass als Vorfilter gebildeten umlaufenden Spalt, insbesondere einem Ringspalt, mit etwa linienförmigem Verlauf und stets gleicher Wirklänge in Strömungsrichtung wird im Strom des Kondensats und/oder des Dampfes ein geometrisch bestimmter Durchlass als Vorfilter erzeugt, der jedoch insbesondere nur in der Endphase der Schließschaltbewegung, aber auf jeden Fall in der Schließstellung des Ventilkegels wirksam ist, bevorzugt nicht hingegen im Resthub der Schaltbewegungen, in welchem der Vorfilter selbsttätig gereinigt wird. Dieser Durchlass dient zumindest zur Vorfilterung von Kondensat und verhindert weitgehend das Einklemmen von Partikeln im Sitz und ein Verstopfen einer zwischen dem Verschlusselement und dem Sitz bildbaren Düse [ursprünglicher Anspruch 1].

Der Spalt muss nicht zwangsweise ringförmig sein. Wenn im Folgenden von Ringspalt die Rede ist, sind auch andere geometrische Formen umfasst. Bevorzugt ist der Ringspalt aber ringförmig.

In der Schließstellung des als Ventilkegel ausgebildeten Verschlusselements verhindert der Spalt ein Verstopfen einer ggf. vorgesehenen Steuerkerbe, was für die Funktion des Kondensatableiters enorm wichtig ist. In der Endphase der Schließschaltbewegung verhindert der Ringspalt ferner, dass Partikel mit einer die Weite des Ringspalts übersteigenden Größe in den Sitz eindringen und zwischen dem Ventilkegel und dem Sitz eingeklemmt werden könnten und die ordnungsgemäße Funktion des Kondensatableiters beeinträchtigen. Dies stellt auch das zuverlässige Erreichen der vorbestimmten Schließstellung des Ventilkegels sicher. Dadurch lässt sich der Kondensatableiter mit deutlich verlängerter Standzeit ohne Störungen betreiben, wobei dennoch jederzeit durch weites Öffnen des Durchgangs eine Zwischenreinigung möglich ist.

Das mit dem erfindungsgemäßen Kondensatableiter ausgestattete aseptische Doppelsitzventil zeichnet sich durch lange Standzeiten und zuverlässige Spül- und Sterilisier-Zyklen aus, wobei ein aseptischer Zustand zumindest des Leckageraums nach jedem Spül- und Sterilisier-Zyklus gewährleistet wird.

Zweckmäßig wird der Ringspalt mit im Wesentlichen konstanter Weite durch einen hinterschnittenen Ringflansch im kleindurchmessrigen Endbereich des Ventilkegels und dem als zylindrische Verlängerung des kleindurchmessrigen Endes des Sitzes ausgebildeten Einlass begrenzt. Anders gesagt wird der Ringspalt in der Schließstellung durch den Abstand zwischen dem Ventilkegelende und dem hohlen Einlass gebildet, wobei der hohle Einlass das Ventilkegelende bevorzugt ringförmig umgibt. Dadurch, dass das Ventilkegelende im Durchmesser etwas kleiner ist als der Einlass wird der Abstand gebildet. Der Ringspalt wird somit auf herstellungstechnisch einfache Weise erzielt und funktionell einfach unter Nutzen bekannter baulicher Merkmale in den Kondensatableiter integriert.

Als weiterer wichtiger Aspekt der Erfindung ist in Strömungsrichtung angrenzend an den Ringspalt und stromab des Ringspalts, vorzugsweise im Ventilkegel, ein zumindest im Wesentlichen zum Ringspalt paralleler und umlaufender Strömungs-Ringraum vorgesehen. Darin kann speziell Kondensat nach Durchtritt durch den Ringspalt aus dem gesamten Kreisumfang unter strömungsgünstigen Bedingungen zu einer Steuerkerbe geleitet werden.

Zweckmäßig ist der Hinterschnitt des Ringflansches von einer im Ventilkegel vorgesehenen, den Strömungs-Ringraum bildenden Umfangsnut gebildet. Dies ist herstellungstechnisch günstig und erlaubt eine strömungsgünstige und präzise Formung des den Ringspalt definierenden Ringflansches am Ventilkegel.

Im Hinblick auf einwandfreie Strömungsverhältnisses im Bereich des Ringspalts ist es zweckmäßig, wenn der Ringflansch und die Umfangsnut im Querschnitt konvex bzw. konkav gerundet sind.

Günstig wird der Ventilkegel mit dem Ringflansch und der Umfangsnut so auf den Sitz abgestimmt, dass in der Schließstellung eine den Ringflansch abgewandte Flanke der Umfangsnut im Ventilkegel in etwa bei dem kleindurchmessrigen Ende des Sitzes steht. Auf diese Weise wird eine bestimmte Hublänge der Anfangsphase bzw. der Endphase der Schaltbewegungen des Ventilkegels vorgegeben, innerhalb derer der Ringspalt als Vorfilter wirksam ist.

Nach einem weiteren, wichtigen Aspekt der Erfindung ist an zumindest einer Umfangsposition in einer Dichtfläche des Ventilkegels oder/und in einer Sitzfläche des Sitzes eine im Wesentlichen zur Kegelachse parallele Steuerkerbe vorgesehen. Dies kann beispielsweise eine annähernd teilzylindrische Ausfräsung sein. Die Steuerkerbe beginnt in der Flanke der Umfangsnut und definiert in der Schließstellung eine offene, zweiteilige Düse. Die stromab des Ringspalts im Ventilkegel vorgesehene Umfangsnut ermöglicht das unbehinderte Zuströmen von Kondensat zur Düse aus dem gesamten Umfang des Ringspalts zur Düse. Durch die Auslegung und Anordnung des Ringspalts wird verhindert, dass Partikel, die die Düse verlegen könnten, bis zur Düse gelangen und diese verstopfen. Da die umfängliche Länge des Filterspalts ein Vielfaches der Düsenweite ist, können sich dort vor dem Ringspalt sehr viele Partikel ablagern, ehe es zu einem kompletten Verschluss des Ringspalts kommt. Wenn der Ringspalt innenseitig durch den beweglichen Ventilkegel begrenzt wird, wird der Ringspalt bei jeder Öffnungsschaltbewegung des Ventilkegels geöffnet und wie auch die Steuerkerbe, intensiv gereinigt. Der Ringspalt verhindert ferner in der Endphase der Schließschaltbewegung des Ventilkegels das Einklemmen größerer Partikel zwischen dem Ventilkegel und dem Sitz, was die angestrebte Wirkung der Düse beeinträchtigen würde, da die Bildung des Ringspalts bereits beginnt, ehe der Ventilkegel im Sitz zur Anlage kommt, d. h., solange der Zwischenraum zwischen dem Ventilkegel und dem Sitz noch groß genug ist, um bis dahin eingedrungene größere Partikel mit der Strömung in den Auslass abzuführen.

Bei diesem schaltbaren Kondensatableiter mit der Steuerkerbe wäre die Anordnung eines konventionellen mechanischen Vorfilters nicht sinnvoll, da bei in die Offenschaltung geschaltetem Kondensatableiter der volle freie Querschnitt des Einlasses offen sein muss, um im Spülzyklus Kondensat und Produktreste zügig abzuführen. Außerdem würde ein permanent durchströmter konventioneller Vorfilter beim Spülzyklus durch Produktreste und Partikel schnell zugelegt werden, was zu unkontrollierbaren hygienischen Verhältnissen führen würde. Andererseits würde ohne Vorfilter die Düse z.B. während eines Sterilisierzyklus leicht durch noch vorhandene Restverschmutzungen aus dem Spülzyklus verstopft, so dass häufige Reinigungszyklen eingesteuert werden müssen, was wiederum die Sterilisierzeit und den Dampfverbrauch signifikant erhöhen würde. Der als Vorfilter sich selbständig öffnende Ringspalt zeigt diese technischen Nachteile hingegen nicht.

Zweckmäßig ist mit der wenigstens einen Steuerkerbe eine zweiteilige Düse formbar, die in Strömungsrichtung ausgehend von der Umfangsnut im Ventilkegel zunächst eine Engstelle bildet und sich anschließend wieder erweitert.

Für die Auslegung des Sitzes und des Ventilkegels sind zwei Konzepte möglich. Es werden entweder gleiche Kegelwinkel vorgesehen, oder der Kegelwinkel des Ventilkegels ist gegenüber dem Kegelwinkel des Sitzes geringfügig kleiner, z. B. um 1 Grad bis 5 Grad. Bei gleichen Kegelwinkeln von Sitz und Ventilkegel erstreckt sich dann die Steuerkerbe von der Umfangsnut bis zum großdurchmessrigen Ende des Sitzes bzw. des Ventilkegels. Bei kleinerem Kegelwinkel des Ventilkegels kann hingegen die Steuerkerbe bereits im Abstand vom großdurchmessrigen Ende des Sitzes bzw. Ventilkegel enden, da dort die Dichtfläche des Ventilkegels einen Abstand von der Sitzfläche des Sitzes aufweist.

Im Übrigen ist es zweckmäßig, wenn im Gehäuse das kleindurchmessrige Ende des Sitzes und des Ventilkegels in Strömungsrichtung stromauf des großdurchmessrigen Endes platziert sind, weil der durchgehende Strom so optimal expandiert.

Zweckmäßig ist die Weite des Ringspalts kleiner als die radiale Tiefe der von der Steuerkerbe gebildeten Düse an der engsten Stelle, so dass Partikel mit einer die Weite des Ringspalts übersteigenden Größe nicht zur Steuerkerbe vordringen. Die Weite kann insbesondere zwischen etwa 0,1 bis 0,4 mm betragen.

Anders gesagt ist die Weite des Ringspalts (Abstand Ventilkegel zu Gehäuse) in Schließstellung kleiner als der weiteste Abstand zwischen dem Ventilkegel und der Sitzfläche im Bereich der Düse (in Richtung der Normalen auf die Sitzfläche gemessen).

Nach einem weiteren wichtigen Gedanken der Erfindung ist die Querschnittsfläche des Ringspalts ein Vielfaches des engsten Querschnitts der Steuerkerbe bzw. Düse. So kann die Querschnittsfläche des Ringspalts beispielsweise um etwa den Faktor zwölf größer sein.

Der Kern der Erfindung besteht in dem integrierten Ringspalt, der einen in Schließstellung und insbesondere bei der Schließschaltbewegung effizient wirkenden, mechanischen Vorfilter auf der Einlass-Seite bildet, und der ohne Eingriff von außen allein durch die Bewegung des Ventilkegels selbsttätig gereinigt wird.

Die Erfindung bezieht sich auch auf eine Getränke-Abfüllanlage mit einem Ventil, welches den Kondensatableiter umfasst. Neben einer insbesondere rundlaufenden Getränkeabfüllmaschine kann die Getränke-Abfüllanlage noch andere Komponenten wie einen Mixer für Getränke, eine CIP-Anlage, eine Kurzzeiterhitzung und/oder einen Entgaser umfassen, welche von dem Getränk bzw. dessen Bestandteilen durchströmt werden. Mittels eines Ventils mit dem Kondensatableiter und/oder mehrerer solcher Ventile können die Ströme an gewissen Stellen unterbrochen, freigegeben oder umgeleitet werden. Das Ventil ist insbesondere über Rohrleitungen mit den oben genannten Komponenten verbunden.

Anhand der Zeichnung werden Ausführungsformen des Erfindungsgegenstandes erläutert. Es zeigen:
Fig. 1 einen Längsschnitt es Kondensatableiters in der Schließstellung,
Fig. 2 ein in Fig. 1 durch einen Kreis hervorgehobenes Detail in größerem Maßstab,
Fig. 3 eine Perspektivansicht eines Ventilkegels des Kondensatableiters,
Fig. 4 einen Längsschnitt des Kondensatableiters am Ende der Anfangsphase einer Öffnungsschaltbewegung bzw. am Anfang einer Endphase der Schließschaltbewegung des Ventilkegels,
Fig. 5 ein in Fig. 4 durch einen Kreis hervorgehobenes Detail im größeren Maßstab, und
Fig. 6 einen Längsschnitt des Kondensatableiters in Offenstellung des Ventilkegels.

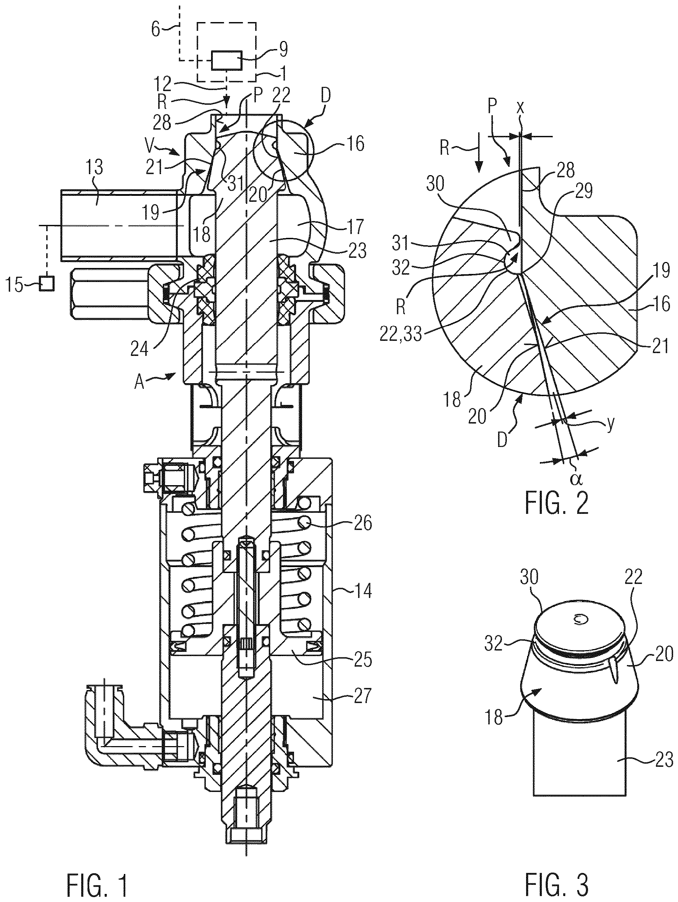

Die Fig. 1 bis Fig. 6 zeigen einen Kondensatableiter A, der, vorzugsweise, mit einem Doppelsitzventil 1 einer Lebensmittel- oder Getränke-Abfüllanlage (nicht gezeigt) kombinierbar ist, jedoch auch für andere Einsatzzwecke nutzbar ist, bei denen ein erhitztes gasförmiges Medium wie Dampf verarbeitet wird. Der Kondensatableiter A entspricht weitgehend dem in DE 10 2016 203 557 A mit älterem Zeitrang beschriebenen.

Im als nicht beschränkendes Beispiel gezeigten Fall ist der Kondensatableiter A über einen Einlass 12 (Einlassleitung) an einen Leckageraum 9 des Doppelsitzventils 1 angeschlossen, wobei zumindest dem Leckageraum 9 Dampf und/oder Kondensat für Spül- und Sterilisier-zyklen über eine Leitung 6 zugeführt wird.

Der Kondensatableiter A in Fig. 1 weist ein Gehäuse 16 auf, das eine Ventilkammer 17 begrenzt und einen Sitz 19 mit konischer Sitzfläche 21 für eine konische Dichtfläche 20 eines Ventilkegels 18 aufweist. Der Sitz 19 erweitert sich vom Einlass 12 konisch in Strömungsrichtung R zur Ventilkammer 17, die an den Auslass 13 angeschlossen ist, der z.B. an einen Pralltopf 15 zum Sammeln von Kondensat und Verunreinigungen angeschlossen sein kann. In der in Fig. 1 gezeigten Schließstellung taucht der Ventilkegel 18 im Wesentlichen zur Gänze von unten in den Sitz 19 ein, so dass die Dichtfläche 20 und die Sitzfläche 21 als ein Sitzventil den Durchgang in Strömungsrichtung R vom Einlass 12 zum Auslass 13 dicht absperren würden. Jedoch bilden der Ventilkegel 18 und der Sitz 19 in der gezeigten Schließstellung mit wenigstens einer Steuerkerbe 22 eine zweiteilige Düse D, über welche selbst in der Schließstellung begrenzter Durchlass gegeben ist. (z.B. für einen Sterilisierungszyklus) Die Steuerkerbe 22 ist in der gezeigten Ausführungsform in der Dichtfläche 20 geformt, beispielsweise als teilzylindrische Ausfräsung. Die durch die Steuerkerbe 22 in der Schließstellung gebildete Düse D bildet in Strömungsrichtung R einer Engstelle und erweitert sich nachfolgend wieder.

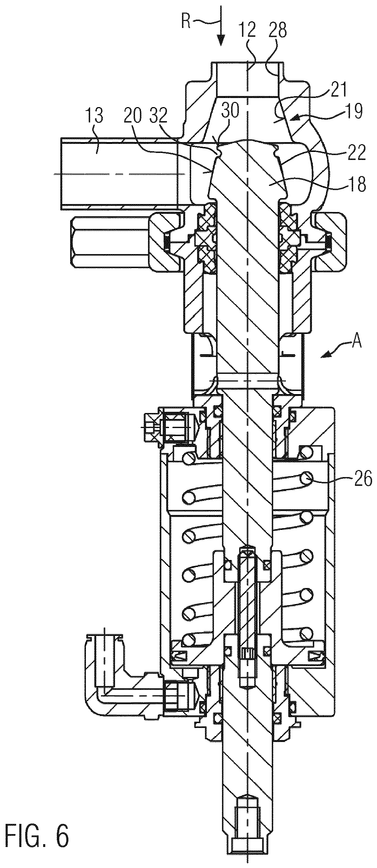

Der Ventilkegel 18 ist an einem Schaft 23 angeordnet, der mit einem Kolben 25 eines Antriebs 14 verbunden und in einer Kammer 27 mit Druckfluid beaufschlagbar ist, um die in Fig. 1 gezeigte Schließstellung einzustellen. In der Gegenrichtung wirkt eine Feder 26, die eine Offenstellung des Kondensatableiters A einstellt (Fig. 6). Der Schaft 23 wird durch eine Dichtung 24 gegenüber der Ventilkammer 17 abgedichtet.

Bei einer nicht gezeigten Alternative könnte die Steuerkerbe 22 in der Sitzfläche 21 des Sitzes 19 angeordnet sein, oder könnten in Umfangsrichtung aufeinander ausgerichtete Steuerkerben sowohl in der Sitzfläche 21 als auch der Dichtfläche 20 vorgesehen sein. Ferner könnten in Umfangsrichtung mehrere Steuerkerben 22 verteilt vorgesehen sein.

Der Einlass 12 ist als zylindrische Verlängerung 28 des kleindurchmessrigen Endes des Sitzes 19 und mit dessen Durchmesser ausgebildet und bildet in der gezeigten Schließstellung mit einem Ringflansch 30 am Ende des Ventilkegels 18 einen umlaufenden Ringspalt P konstanter Weite (z. B. bis 0,2 bis 0,4 mm), und zwar nur solange wie während der Öffnungs- oder Schließschaltbewegungen des Ventilkegels 18 das kleindurchmessrige Ende des Ventilkegels 18 mit dem Ringflansch 30 in die zylindrische Verlängerung 28 eintaucht. In Strömungsrichtung R angrenzend an den Ringspalt P ist in den Ventilkegel 18 ein ringförmiger, im Wesentlichen zum Ringspalt P paralleler Strömungsraum 31 eingeformt, z. B. eine Umfangsnut 32 (Fig. 2), in der die Düse D beginnt.

Der Kondensatableiter A mit dem Ringspalt P könnte auch ohne die Steuerkerbe 22 betrieben werden.

In der Ausführungsform in Fig. 1 und 2 haben der Sitz 19 und der Ventilkegel verschiedene Kegelwinkel, d. h. der Kegelwinkel der Dichtfläche 20 des Ventilkegels 18 ist um einen Winkel α kleiner als der Kegelwinkel der Sitzfläche 21 des Sitzes 19. Der Winkelunterschied kann zwischen etwa 1 Grad und 4 Grad liegen. Dadurch erweitert sich bei Anlage der Dichtfläche 20 beim kleindurchmessrigen Ende des Ventilkegels 18 an der Sitzfläche 21 beim kleindurchmessrigen Ende des Sitzes 19 in Strömungsrichtung R ein Freiraum, in welche die Düse D mündet, die sich gemäß Fig. 3 von einer Flanke 33 der Umfangsnut 32 nur über einen Teil der axialen Höhe der Dichtfläche 20 erstreckt. Die Düse D hat einen sich in Strömungsrichtung R zunächst verengenden Querschnitt und erweitert sich z.B. mit dem Freiraum ab der engsten Stelle.

Bei einer alternativen, nicht gezeigten Ausführungsform könnten die Kegelwinkel von Ventilkegel 18 und Sitz 19 gleich sein. In diesem Fall erstreckt sich die Steuerkerbe 22 (in der Dichtfläche 20 oder der Sitzfläche 21 oder in beiden) bis zum großdurchmessrigen Ende der Dichtfläche 20 oder der Sitzfläche 21. Der jeweilige Kegelwinkel kann zwischen etwa 30 Grad und 60 Grad betragen, und liegt vorzugsweise bei etwa 40 Grad (Spitzenwinkel).

Der Ringspalt P wird begrenzt durch den Ringflansch 30 am kleindurchmessrigen Ende des Ventilkegels 18 und der Innenwand der zylindrischen Verlängerung 28. Der Ringflansch 30 kann durch die Umfangsnut 32 hinterschnitten sein, wobei im Querschnitt gerundete Konturen mit gerundetem Übergang zweckmäßig sind. In der in den Fig. 1 und 2 gezeigten Schließstellung liegt die Flanke 33 der Umfangsnut 32 in etwa auf der Höhe des kleindurchmessrigen Endes 29 der Sitzfläche 21 des Sitzes 19. Die Düse D hat in der Schließstellung an der engsten Stelle eine radiale Weite Y, größer ist als die Weite X des Ringspalts P.

In Fig. 3 ist am Ventilkegel 18 nur eine Steuerkerbe 22 an einer Umfangsposition gezeigt. Alternativ könnten mehr als eine Steuerkerbe in Umfangsrichtung verteilt sein.

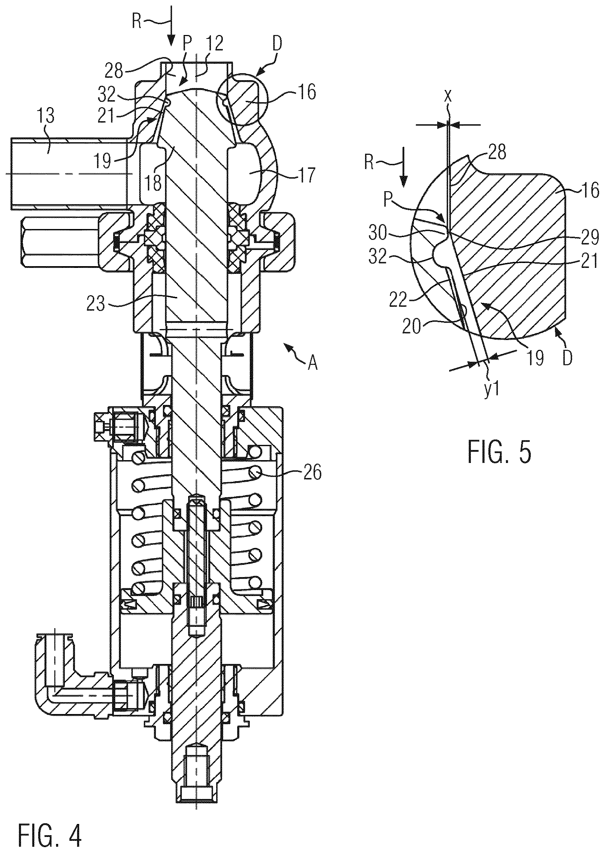

Fig. 4 zeigt den Kondensatableiter A in einer Stellung, die dem Anfang einer Endphase einer Schließ-Schaltbewegung des Ventilkegels 18 entspricht, d. h., es ist Durchsatz durch den Ringspalt P möglich, der zur Freispülung des Ventilsitzes vor dem endgültigen Schließen des Ventilsitzes dient. Dieser Durchsatz ist noch wesentlich größer, als der Durchsatz in der Schließstellung in Fig. 1, jedoch wesentlich geringer als der Durchsatz in der Offenstellung in Fig. 6.

Bei einer weiteren nicht gezeigten Alternative könnte die Steuerkerbe 22 weggelassen werden, so dass nur der Ringspalt P den Durchsatz zwischen den Stellungen der Fig. 1 und Fig. 4 bestimmt.

Fig. 5 verdeutlicht im vergrößerten Maßstab einen Ausschnitt, der in Fig. 4 durch einen Kreis hervorgehoben ist. Der Ringflansch 30, der den Ringspalt P mit der zylindrischen Verlängerung 28 und der Weite X begrenzt, steht in etwa beim kleindurchmessrigen Ende 29 des Sitzes 19, während die Umfangsnut 32 unterhalb des kleindurchmessrigen Endes 29 liegt. Die Steuerkerbe 22 hat in der Dichtfläche 20 bereits einen deutlichen Abstand Y1 von der Sitzfläche 21, der ein Vielfaches der Weite X ist, beispielsweise in etwa das Zwölffache.

In der in Fig. 6 gezeigten Offenstellung des Kondensatableiters A, geschaltet durch die Feder 26, ist der Ventilkegel 18 in etwa bis zum großdurchmessrigen Ende des Sitzes 19 aus diesem herausgezogen, so dass ein großer Strömungsquerschnitt, etwa entsprechend den Querschnitten der zylindrischen Verlängerung 28 und des Auslasses 13 geöffnet ist.

Der Ringspalt P hat einen zweifachen Zweck: In der Schließstellung gemäß Fig. 1, verhindert der Ringspalt P das Eindringen von im Kondensat/Dampf enthaltenden Partikeln zur Düse D bzw. in den Sitz 19, deren Größe größer ist als die Weite X des Ringspalts P. Auf diese Weise wird ein Verlegen der Düse D verhindert. In der Endphase der Schließ-Schaltbewegung des Ventilkegels (zwischen Fig. 5 und Fig. 2) verhindert der Ringspalt P das Eindringen größerer Partikel zwischen die Dichtfläche 20 und die Sitzfläche 21, die dort eingeklemmt werden könnten und das Erreichen der Schließstellung von Fig. 1 behindern oder verhindern und die Düse D verlegen könnten. Die den Ringspalt P passierende Strömung gelangt von allen Seiten in die Umfangsnut 32 und daraus zur Düse D und zum Auslass 13.

Da die Umfangslänge des Ringspalts P ein Vielfaches der Düsenweite ist, können sich entlang des Ringspalts P viele Partikel anlagern, ehe es zu einem kompletten Verschluss des Ringspalts P kommt. Nach Beginn der Öffnungs-Schaltbewegung des Ventilkegels 18 und beim Herausziehen des Ringflansches 30 aus dem Sitz 19 öffnet sich ein großer Durchgangsquerschnitt, sodass lebhaft strömendes Kondensat die Düse D bzw. die Steuerkerbe 22 (falls vorhanden), die Sitzfläche 21 und die Dichtfläche 20 intensiv reinigt. Im Falle einer Verstopfung kann eine gesteuerte Zwischenreinigung vorgenommen werden, indem beispielsweise der Ventilkegel 18 kurzfristig in Richtung zu der Stellung von Fig. 6 gezogen wird, und nachdem Verunreinigungen ausgespült wurden, wieder in die Schließstellung oder die Stellung von Fig. 4 gebracht wird. Bei der Schließ-Schaltbewegung des Ventilkegels 18 verhindert der Ringspalt P das Einklemmen größerer Partikel im Sitz 19, da der Ringspalt P bereits zu wirken beginnt, ehe der Ventilkegel 18 den Sitz 19 kontaktiert, und in dieser Phase der Zwischenraum zwischen dem Ventilkegel 18 und dem Sitz 19 noch groß genug ist, um eingedrungene Partikel größer als die Weite X des Ringspalts P nach außen zum Auslass 13 abzuführen.

Die in Fig. 1 gezeigte Schließstellung wird beispielsweise während eines Sterilisierzyklus mit Dampf, beispielsweise im Leckageraum 9 des Doppelsitzventils 1 geschaltet, während die in Fig. 6 gezeigte Offenstellung einem Spülzyklus zugehört, bei dem der Leckageraum 9 mit flüssigem Kondensat oder einer Mischung aus Kondensat und Dampf gereinigt wird.

## Patentansprüche

1. Kondensatableiter (A), insbesondere für aseptische Doppelsitzventile (1) in Getränke- oder Lebensmittel-Abfüllanlagen, mit einem Gehäuse (16), in welchem zwischen einem Dampf- und/oder Kondensat-Einlass (12) und einem Auslass (13) ein Sitz (19) für ein Verschlusselement (18) vorgesehen ist, das mittels eines Antriebs (14) zwischen einer Schließstellung im Sitz (19) und einer aus dem Sitz (19) gehobenen Offenstellung hin- und herschaltbar ist,
**dadurch gekennzeichnet, dass**
zumindest in der Endposition der Schließstellung in Strömungsrichtung (R) des Dampfs und/oder Kondensats vom Einlass (12) in den Auslass (13) stromauf des Sitzes (19) durch einen Abstand des Verschlusselements (18) vom Gehäuse (16) ein umlaufender Spalt mit im Wesentlichen konstanter Weite (X) gebildet wird.

2. Kondensatableiter nach Anspruch 1, wobei der Spalt als Ringspalt (P) durch einen, vorzugsweise hinterschnittenen, Ringflansch (30) im kleindurchmessrigen Endbereich des als Ventilkegel ausgebildeten Verschlusselements (18) und dem als axiale, vorzugsweise zylindrische, Verlängerung (28) des kleindurchmessrigen Endes (29) des Sitzes (19) ausgebildeten Einlass begrenzt ist, wobei der Ringflansch (30) und die Verlängerung (28) gleiche Umrisse aufweisen, vorzugsweise kreisrund oder polygonal sind.

3. Kondensatableiter nachwenigstens einem der vorhergehenden Ansprüche wobei in Strömungsrichtung (R) stromab des Spalts und im Wesentlichen angrenzend an den Spalt, vorzugsweise im als Ventilkegel (18) ausgebildeten Verschlusselement, ein zumindest im Wesentlichen zum Spalt paralleler und umlaufender Strömungs-Ringraum (31) vorgesehen ist.

4. Kondensatableiter nach wenigstens einem der Ansprüche 2 bis 3, wobei ein Hinterschnitt des Ringflansches (30) von einer im Ventilkegel (18) vorgesehenen, den Strömungs-Ringraum (31) bildenden Umfangsnut (32) gebildet wird.

5. Kondensatableiter nach wenigstens einem der Ansprüche 2 bis 4, wobei im Querschnitt der Ringflansch (30) konvex und die Umfangsnut (32) konkav gerundet sind, vorzugsweise mit einem gerundeten Übergang, und dass, vorzugsweise, der Sitz (19) und der Ventilkegel (18) Kegelstumpf-Mantel als Sitz-und Dichtflächen (21, 20) aufweisen.

6. Kondensatableiter nach wenigstens einem der Ansprüche 2 bis 5, wobei in der Schließstellung eine dem Ringflansch (30) abgewandte Flanke (33) der Umfangsnut (32) in etwa beim kleindurchmessrigen Ende (29) des Sitzes (19) steht.

7. Kondensatableiter nach wenigstens einem der Ansprüche 2 bis 6, wobei an zumindest einer Umfangsposition in einer Dichtfläche (20) des Ventilkegels (18) oder/und in einer Sitzfläche (21) des Sitzes (19) eine im Wesentlichen zur Kegelachse parallele Steuerkerbe (22), vorzugsweise eine etwa teilzylindrische Einfräsung, vorgesehen ist, die in der Flanke (33) der Umfangsnut (32) beginnt.

8. Kondensatableiter nach Anspruch 7, wobei mit der wenigstens einer Steuerkerbe (22) zumindest in der Schließstellung eine zweiteilige Düse (D) formbar ist, die in Strömungsrichtung (R) ausgehend von der Umfangsnut (32) beginnt und sich anschließend erweitert.

9. Kondensatableiter nach Anspruch 7, wobei sich die Steuerkerbe (22) bei gleichen Kegelwinkeln von Sitz (19) und Ventilkegel (18) bis zum großdurchmessrigen Ende des Sitzes (19) bzw. des Ventilkegels (18) erstreckt, hingegen bei gegenüber dem Kegelwinkel des Sitzes (19) kleinerem Kegelwinkel des Ventilkegels (18) im Abstand vom großdurchmessrigen Ende des Sitzes (19) bzw. des Ventilkegels (18) endet.

10. Kondensatableiter nach wenigstens einem der Ansprüche 2-9, wobei im Gehäuse (16) in Strömungsrichtung (R) das kleindurchmessrige Ende (29) des Sitzes (19) und des Ventilkegels (18) stromauf des jeweiligen großdurchmessrigen Endes platziert sind.

11. Kondensatableiter nach Anspruch 8, wobei die Spaltweite (X) des Ringspalts(P), die, vorzugsweise, etwa 0,1 bis 0,4 mm beträgt, kleiner ist als die radiale Tiefe (Y) der Steuerkerbe (22) an der engsten Stelle der Düse (D).

12. Kondensatableiter nach Anspruch 7 oder 8, wobei die Querschnittsfläche des Ringspalts (P) ein Vielfaches des engsten Querschnitts der Steuerkerbe (22) bzw. der Düse (D) beträgt, vorzugsweise um etwa den Faktor zwölf größer ist.

13. Aseptisches Doppelsitzventil (1) einer Getränke- oder Lebensmittel-Abfüllanlage, mit einem mit Kondensat spülbaren und mit Dampf sterilisierbaren Leckageraum (9), wobei das Doppelsitzventil (1) einen mit dem Einlass (12) an den Leckageraum (9) angeschlossenen, schaltbaren Kondensatableiter (A) gemäß Anspruch 1 aufweist.

14. Getränke-Abfüllanlage mit einem Ventil (1), welches den Kondensatableiter (A) nach Anspruch 1 umfasst.

## Claims

1. A steam trap (A), in particular for aseptic double seat valves (1) in beverage or food filling plants, comprising a housing (16) having formed therein a seat (19) for a closure element (18) between a steam and/or condensate inlet (12) and an outlet (13), the closure element (18) being adapted to be switched to and from by means of a drive (14) between a closed position in the seat (19) and an open position raised from the seat (19),
**characterized in that**
at least at an end position of the closed position, a circumferential gap having substantially constant width (X) is formed upstream of the seat (19) in the flow direction (R) of the steam and/or condensate from the inlet (12) into the outlet (13) by a distance of the closure element (18) from the housing (16).

2. The steam trap according to claim 1, wherein the gap is delimited as an annular gap (P) with a, preferably undercut, annular flange (30) in a small-diameter end region of the closure element (18), which is configured as a valve cone, and by the inlet (12), which is configured as an axial, preferably cylindrical, extension (28) of a small-diameter end (29) of the seat (19), the annular flange (30) and the extension (28) having identical contours, preferably being circular or polygonal.

3. The steam trap according to at least one of the proceeding claims, wherein a circumferential annular flow space (31) extending, at least substantially, parallel to the gap is provided, when seen in the flow direction (R), downstream of and substantially adjacent to the gap, preferably in the conical closure element (18).

4. The steam trap according to at least one of the claims 2 to 3, wherein an undercut of the annular flange (30) is formed by a circumferential groove (32) provided in the conical closure element (18) and defining the annular flow space (31).

5. The steam trap according to at least one of claims 2 to 4, wherein in a cross-sectional view, the annular flange (30) is rounded convexly and the circumferential groove (32) is rounded concavely, preferably with a rounded transition, and wherein, preferably, the seat (19) and the closure element (18) have frusto-conical circumferential surfaces respectively defining a seating area (21) and a sealing face (20).

6. The steam trap according to at least one of the claims 2 to 5, wherein at the closed position, a flank (33) of the circumferential groove (32) remote from the annular flange (30) is located approximately close to the small-diameter end (29) of the seat (19).

7. The steam trap according to at least one of the claims 2 to 6, wherein a sealing face (20) of the closure element (18) or/and a seating area (21) of the seat (19) have provided therein a control notch (22), preferably an approximately partially cylindrical milled-out portion, at least at one circumferential position, said control notch (22) extending substantially parallel to the cone axis and beginning in the flank (33) of the circumferential groove (32).

8. The steam trap according to claim 7, wherein at least in the closed position by means of the at least one control notch (22), a two-part nozzle (D) can be formed, said nozzle (D) beginning, when seen in the flow direction (R), at the circumferential groove (32) and increasing in width subsequently.

9. The steam trap according to claim 7,wherein the control notch (22) extends up to the large-diameter end (29) of the seat (19) and of the conical closure element (18), respectively, provided the seat (19) and the valve cone (18) have identical cone angles, whereas it ends at a distance from the large-diameter end of the seat (19) and of the conical closure element (18), respectively, provided the cone angle of the conical closure element (18) is smaller than the cone angle of the seat (19).

10. The steam trap according to at least one of the claims 2 to 9, wherein in the housing (16), the small-diameter end (29) of the seat (19) and of the conical closure element (18) are positioned upstream of the respective large-diameter end, when seen in the flow direction (R).

11. The steam trap according to claim 8, wherein the gap width (X) of the annular gap (P), which preferably ranges from approximately 0.1 to 0.4 mm, is smaller than the radial depth (Y) of the control notch (22) at the narrowest location of the nozzle (D).

12. The steam trap according to claim 7 or 8, wherein the cross-sectional area of the annular gap (P) is a multiple of the narrowest cross-section of the control notch (22) and of the nozzle (D), respectively, and is preferably about larger by the factor twelve.

13. An aseptic double seat valve (1) of a beverage or food filling plant, comprising a leakage chamber (9), which is adapted to be flushed with condensate and to be sterilized with steam, wherein the double seat valve (1) comprises a switchable steam trap (A) according to claim 1, which has its inlet (12) connected to the leakage chamber (9).

14. A beverage filling plant comprising a valve (1), which comprises the steam trap (A) according to claim 1.

## Revendications

1. Purgeur de condensat (A), en particulier pour des soupapes aseptiques à double siège (1) au sein d'installations de remplissage de boissons ou de produits alimentaires, comprenant un boîtier (16) au sein duquel un siège (19), destiné à un élément de fermeture (18) pouvant être commuté au moyen d'un entraînement (14) entre une position fermée où il se trouve dans le siège (19) et une position ouverte où il se trouve hors du siège (19), est fourni entre une entrée de vapeur et/ou de condensat (12) et une sortie (13),
**caractérisé en ce que**
un interstice périphérique présentant une largeur (X) essentiellement constante est formé grâce à un espacement de l'élément de fermeture (18) par rapport au boîtier (16), au moins dans la position finale de la position fermée dans la direction de circulation (R) de la vapeur et/ou du condensat allant de l'entrée (12) à la sortie (13) en amont du siège (19).

2. Purgeur de condensat selon la revendication 1, dans lequel l'interstice est délimité sous la forme d'un interstice annulaire (P) grâce à une bride annulaire (30), de manière préférée en contre-dépouille, dans la région terminale de petit diamètre de l'élément de fermeture (18) réalisé sous la forme d'un cône de soupape, et de l'entrée, réalisée sous la forme d'un prolongement axial (28), de manière préférée cylindrique, de l'extrémité (29) de petit diamètre du siège (19), dans lequel la bride annulaire (30) et le prolongement (28) présentent des contours identiques, de manière préférée circulaires ou polygonaux.

3. Purgeur de condensat selon au moins l'une quelconque des revendications précédentes, dans lequel un espace annulaire de circulation (31) au moins essentiellement périphérique et parallèle par rapport à l'interstice est fourni dans le sens de circulation (R) en aval de l'interstice et de manière essentiellement adjacente à l'interstice, de manière préférée dans l'élément de fermeture réalisé sous forme de cône de soupape (18).

4. Purgeur de condensat selon la revendication 2 ou 3, dans lequel une contre-dépouille de la bride annulaire (30) est formée par une rainure périphérique (32) fournie dans le cône de soupape (18) et formant l'espace annulaire de circulation (31).

5. Purgeur de condensat selon au moins l'une quelconque des revendications 2 à 4, dans lequel, en coupe transversale, la bride annulaire (30) est arrondie de manière convexe et la rainure périphérique (32) est arrondie de manière concave, de manière préférée avec une transition arrondie, et dans lequel le siège (19) et le cône de soupape (18) présentent de manière préférée une enveloppe tronconique faisant office de surfaces de siège et d'étanchéité (21, 20).

6. Purgeur de condensat selon au moins l'une quelconque des revendications 2 à 5, dans lequel, dans la position fermée, un flanc (33), opposé à la bride annulaire (30), de la rainure périphérique (32) est situé approximativement à l'extrémité de petit diamètre (29) du siège (19).

7. Purgeur de condensat selon au moins l'une quelconque des revendications 2 à 6, dans lequel une encoche de commande (22) essentiellement parallèle à l'axe de cône, de manière préférée un évidement fraisé approximativement partiellement cylindrique et commençant dans le flanc (33) de la rainure périphérique (32), est fournie au niveau d'au moins une position périphérique dans une surface d'étanchéité (20) du cône de soupape (18) et/ou dans une surface de siège (21) du siège (19).

8. Purgeur de condensat selon la revendication 7, dans lequel une buse en deux parties (D), qui commence à partir de la rainure périphérique (32) dans la direction de circulation (R) et s'élargit ensuite, peut être formée avec la au moins une encoche de commande (22) au moins dans la position fermée.

9. Purgeur de condensat selon la revendication 7, dans lequel l'encoche de commande (22) s'étend jusqu'à l'extrémité de grand diamètre du siège (19) ou du cône de soupape (18) pour des angles de cône identiques du siège (19) et du cône de soupape (18), mais se termine à distance de l'extrémité de grand diamètre du siège (19) ou du cône de soupape (18) pour un angle de cône du cône de soupape (18) inférieur à l'angle de cône du siège (19).

10. Purgeur de condensat selon au moins l'une quelconque des revendications 2 à 9, dans lequel l'extrémité de petit diamètre (29) du siège (19) et du cône de soupape (18) est placée dans le boîtier (16) en amont de l'extrémité de grand diamètre respective dans la direction de circulation (R).

11. Purgeur de condensat selon la revendication 8, dans lequel la largeur d'interstice (X) de l'interstice annulaire (P), qui est de manière préférée comprise entre environ 0,1 et 0,4 mm, est inférieure à la profondeur radiale (Y) de l'encoche de commande (22) au niveau du point le plus étroit de la buse (D).

12. Purgeur de condensat selon la revendication 7 ou 8, dans lequel la surface de section transversale de l'interstice annulaire (P) est un multiple de la section transversale la plus étroite de l'encoche de commande (22) ou de la buse (D), et lui est de manière préférée supérieure à raison d'un facteur d'environ douze.

13. Soupape à double siège aseptique (1) d'une installation de remplissage de boissons ou de produits alimentaires, comprenant une chambre de fuite (9) pouvant être rincée avec du condensat et pouvant être stérilisée avec de la vapeur, dans laquelle la soupape à double siège (1) présente un purgeur de condensat (A) selon la revendication 1, raccordé à la chambre de fuite (9) grâce à l'entrée (12) et pouvant être commuté.

14. Installation de remplissage de boissons comprenant une soupape (1) comprenant le purgeur de condensat (A) selon la revendication 1.
